# EUROPEAN PATENT SPECIFICATION

(11) **EP 4 589 744 B1**
(45) Date of publication and mention of the grant of the patent: **13.05.2026**
(21) Application number: 24210358.8
(22) Date of filing: 01.11.2024
(51) Int. Cl.: H01M 50/213, H01M 50/289

(54) **BATTERY MODULE**
BATTERIEMODUL
MODULE DE BATTERIE

(30) Priority: 22.01.2024 KR 20240009634
(43) Date of publication of application: 23.07.2025
(73) Proprietor: Samsung SDI Co., Ltd., Gyeonggi-do 17084 (KR)
(72) Inventor: Park, Sanghun, Yongin-si, Gyeonggi-do 17084 (KR)
(74) Representative: Gulde & Partner

(56) References cited:
- CN-U- 210 015 886
- DE-A1- 102021 106 470

## Description

### BACKGROUND

### 1. Field

One or more embodiments relate to a battery module.

### 2. Description of the Related Art

Secondary batteries are chargeable and dischargeable and may be used as energy sources for mobile devices, electric vehicles, hybrid vehicles, electric bicycles, and uninterruptible power supplies. Depending on the type of an external device to which a secondary battery is applied, the secondary batteries may be used in the form of a single battery cell or in the form of a module or pack in which multiple battery cells are connected and bundled into one unit.

The information disclosed in the background technology of the disclosure is only to facilitate understanding of the background of the disclosure, and therefore may include information that does not constitute prior art.

Conventional battery modules are disclosed in CN210015886U and DE102021106470A1.

### SUMMARY

One or more embodiments include a battery module having high rigidity and durability configured to withstand a torque applied to a case by a fastening member when fastening the case with the fastening member.

However, the technical problem to be solved by the present disclosure is not limited to the above-mentioned problem, and other problems not mentioned may be clearly understood by those skilled in the art from the description of the disclosure described below.

Additional aspects will be set forth in part in the description which follows and, in part, will be apparent from the description, or may be learned by practice of the presented embodiments of the present disclosure.

According to the present invention, a battery module includes a first case, a second case connected on top of the first case, and a boss formed on each of the first case and the second case and including a rib on an outer surface, wherein the boss formed in the first case and the boss formed in the second case are formed at positions corresponding to each other, extend toward each other, are connected to each other by a fastening member in a state that at least some parts are in contact with each other, and include different number of bosses.

The boss formed in the second case may include a greater number of ribs than the boss formed in the first case.

The first case and the second case may include an opening into which a battery cell is inserted and a partition wall defining the opening.

The rib may be formed continuously throughout a height direction of the boss and extends parallel to the height direction of the boss.

An upper surface of the rib may be the same height as an upper surface of the boss.

The rib may include a curved unit curvedly extending from an outer circumferential surface of the boss and spaced inward from an edge of the partition wall,
The curved unit may have a sign of curvature different from that of the outer circumferential surface of the boss.

The rib may have a shape tapered upward in the height direction of the boss.

The boss may include a first fastening protrusion formed on the first case and a second fastening protrusion formed on the second case, wherein the first fastening protrusion may include a first body and a first rib formed on the outer circumferential surface of the first body.

A plurality of first ribs may be formed on the outer circumferential surface of the first body, and the plurality of first ribs may be arranged asymmetrically with respect to the center of the first body.

The first case may include a first opening into which a battery cell is inserted, a first partition wall defining the first opening, and a first groove formed between the plurality of first partition walls.

A plurality of second ribs may be formed on the outer circumferential surface of the second body, and the plurality of second ribs may be arranged asymmetrically with respect to the center of the second body.

The second case may include a second opening into which the battery cell is inserted, a second partition wall defining the second opening, and a second groove formed between the plurality of second partition walls.

The second rib and the third rib may be arranged at an equal angle in the circumferential direction of the second body.

The third rib may have a length less than that of the second rib.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a diagram of a battery module according to an embodiment;
FIG. 2 is an exploded view of the battery module;
FIG. 3 is a diagram of a first case;
FIG. 4 is a diagram showing an enlarged portion IV of FIG. 3;
FIG. 5 is a plan view of FIG. 4;
FIG. 6 is a diagram showing an enlarged view of a first fastening protrusion;
FIG. 7 is a diagram showing a second case;
FIG. 8 is a diagram showing an enlarged view of a portion VII of FIG. 7;
FIG. 9 is a plan view of FIG. 8;
FIG. 10 is a diagram showing an enlarged view of a second fastening protrusion; and
FIG. 11 is a diagram showing a state in which the first case and the second case are fastened.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Some embodiments of the present disclosure and methods according thereto may be understood by referring to the detailed descriptions and drawings of the embodiments. The described embodiments may have various modifications and be implemented in different forms and are not limited to the embodiments described herein. Additionally, some or all of features of various embodiments of the present disclosure may be combined with each other within the scope of the appended claims. Each embodiment may be implemented independently or in connection with each other within the scope of the appended claims. The described embodiments are provided as examples so that the disclosure is thorough and complete, and are also intended to completely convey the gist of the present disclosure to those skilled in the art to which the present disclosure pertains. The disclosure is subject to all modifications, equivalents, and substitutions within the technical scope of the present disclosure. Accordingly, processes, elements, and techniques that are not necessary to those skilled in the art for a complete understanding of the embodiments of the present disclosure may not be described.

Unless otherwise noted throughout the accompanying drawings and specification, like reference numerals, letters, or combinations thereof indicate the same components, and thus overlapping descriptions are omitted. Additionally, in order to clearly explain the present disclosure, parts not related to the description or parts unrelated to the description have been omitted.

The relative sizes of elements, layers, and regions in the drawings may be exaggerated for clarity. The use of hatching and/or shading in the accompanying drawings are provided to clarify boundaries between generally adjacent elements. Accordingly, the presence or absence of hatching or shading does not indicate a particular material, material properties, dimensions, proportions, commonality between figure elements and/or other characteristics or properties of one element that is not designated, and desirable form or requirements for attributes, etc.

Various embodiments are described in the present disclosure with reference to cross-sectional examples that are schematic illustrations of embodiments and/or intermediate structures. The appearance of the drawing may therefore vary, for example as a result of manufacturing techniques and/or tolerances. In addition, the specific structural or functional description disclosed in the specification is merely an example for explaining embodiments according to the concept of the present disclosure. Accordingly, the embodiments disclosed in this specification should not be construed as being limited to the shape of the illustrated area and include, for example, deviation in shape due to manufacturing.

Areas shown in the drawings are schematic in nature and their shapes are not intended to be limiting or illustrative of the actual shape of the device areas. Additionally, as those skilled in the art will recognize, the described embodiments may be modified in various ways without departing from the scope of the appended claims.

Numerous specific details are set forth in the specification to provide a thorough understanding of the various embodiments. However, various embodiments may be practiced without or including one or more of these specific details. In other instances, well-known structures and devices are shown in a block diagram form to avoid unnecessarily obscuring the various embodiments.

As illustrated in the drawings, to describe a relationship between one element or feature to another element or feature, in order to easily describe, spatially relative terms such as "below", "above", "lower", "upper", etc. may be used. Spatially relative terms are intended to include various orientations of a device in use or operation in addition to those shown in the drawings. For example, if the device in the drawings is turned over, other elements or features described as "below" or "lower" may face "above" the other elements or features. Accordingly, as illustrative terms, "down" and "lower" may include both up and down directions. A device may be oriented in different directions (e.g., rotated 90 degrees or in other directions) and the spatially relative descriptions used in the present disclosure should be interpreted accordingly. Similarly, when a first part is described as being disposed "above" a second part, this denotes that the first part is disposed above or below the second part.

In addition, the expression "viewed from a plane" refers to a view of an object from above, and the expression "in a schematic cross-section view" refers to a schematic cross-section taken by cutting the object vertically. The term "viewed from a side" denotes that a first object may be above, below or to a side of a second object and vice versa. Additionally, the terms "overlap" or "doubled" may include layer, stack, surface, extension, covering, or partially covering, or any other suitable term that would be understood by one of ordinary skill in the art. The expression "does not overlap" may include meanings such as "spaced apart from" or "separated from" and any other suitable equivalents recognized and understood by those skilled in the art. The terms "face" and "surface" may denote that a first object may directly or indirectly face a second object. When there is a third object between the first object and the second object, the first object and the second object face each other, but may be understood as indirectly facing each other.

When an element, layer, region, or component is referred to as being "formed," "connected," or "coupled" to another element, it may be said to be formed directly on a layer, region, or component, formed on another component, layer, region or component, or indirectly formed on, connected to, or coupled to another component. It also may be collectively referred to direct or indirect combinations or connections of elements, layers, regions, or components and integral or non-integral combinations or connections so that one or more elements, layers, regions, or components may be present. For example, when an element, layer, region, or component is referred to as being "electrically connected" or "electrically coupled" to another element, layer, region, or component, this means that the element, layer, region, or component may be directly electrically connected or coupled, or other elements, layers, regions, or components may be present. However, "direct connection" or "direct coupling" means that one component is directly connected or combined with another component without an intermediate component or exits on another component. Additionally, in the present specification, when a part of a layer, film, region, plate, etc. is formed in another part, the formation direction is not limited to an upper direction, and includes that the part is formed on a side or bottom. Conversely, when a part of a layer, film, region, plate, etc. is formed "under" another part, it includes not only a case in which the part is "immediately below" the other part, but also a case in which another part is present between the part and the other part. Meanwhile, other expressions that describe relationships between components, such as "between," "immediately between," "adjacent to," and "immediately adjacent to," may be interpreted similarly. Additionally, when an element or layer is referred to as being "between" two elements or layers, it may be an only element between the two elements or layers, or there may be other elements in therebetween.

For the purposes of the specification, expressions such as "at least one or more" or "anyone" do not limit the order of individual elements. For example, "at least one of X, Y and Z", "at least one of X, Y or Z", "at least one selected from the group consisting of" may include X alone, Y alone, Z alone, or any combination of two or more of X, Y, and Z. Similarly, expressions such as "at least one of A and B" and "at least one of A or B" may include A, B or A and B. In the present specification, the term "or" generally includes "and/or", and "and/or" includes any combination of one or more related list items. For example, an expression such as "A and/or B" may include A, B, or A and B.

Although the terms "first", "second", "third", etc. may be used herein to describe various elements, components, regions, layers, and/or sections, such elements, components, regions, layers, and/or cross-section are not limited by these terms. These terms are used to distinguish one element, component, region, layer, or cross-section from another element, component, region, layer, or cross-section. Accordingly, a first element, component, region, layer, or cross section described below may be referred to as a second element, component, region, layer, or cross section without departing from the scope of the present disclosure. Describing an element as a "first" element may not require or imply the presence of a second or another element. Terms such as "first," "second," etc. may be used herein to distinguish different categories or sets of elements in the present disclosure. For clarity, terms such as "first," "second," etc. may refer to "first category (or first set)," "second category (or second set)," etc., respectively.

The terms used in this application are only used to describe specific embodiments and are not intended to limit the disclosure. As used herein, singular terms are intended to include plural terms and plural terms are also intended to include the singular, unless the context clearly dictates otherwise. The terms "include," "provide," and "have" when used herein are meant to designate the presence of specified features, integers, or operations. These expressions do not exclude the presence or addition of one or more other functions, steps, operations, components, and/or groups thereof.

If one or more embodiments may be implemented differently, a certain process sequence may be performed differently than a described order. For example, two processes described in succession may be performed substantially simultaneously or may be performed in an order opposite to that described.

As used herein, the terms "substantially," "about," and similar terms are used in terms of approximation and not in terms of degree and are intended to account for inherent variations in measured or calculated values that would be recognized by a person of ordinary skill in the art. As used herein, the term "about" or "approximately" includes the stated value and denotes within a permissible range of deviation (e.g., a range of deviation due to limitations of the measurement system) for a specific value as determined by an ordinary skill in the art taking into account the corresponding measurement and associated errors. For example, the term "about" may denote within one or more standard deviations or within ± 30 %, 20 %, 10 %, or 5 % of a specified value.

Unless otherwise defined, all terms used herein, including technical or scientific terms, have the same meaning as commonly understood by an ordinary skill in the technical field to which the present disclosure belongs. Terms, such as those defined in commonly used dictionaries shall be construed to have a meaning consistent with their meaning in the context of the relevant technology and/or this specification, and unless explicitly defined herein, it is not to be interpreted in an idealized or overly formal sense.

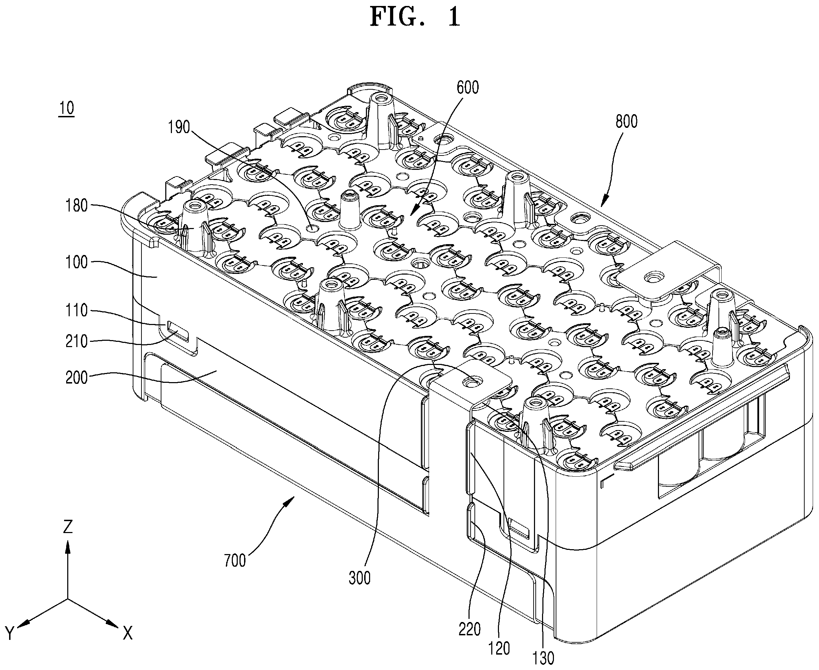

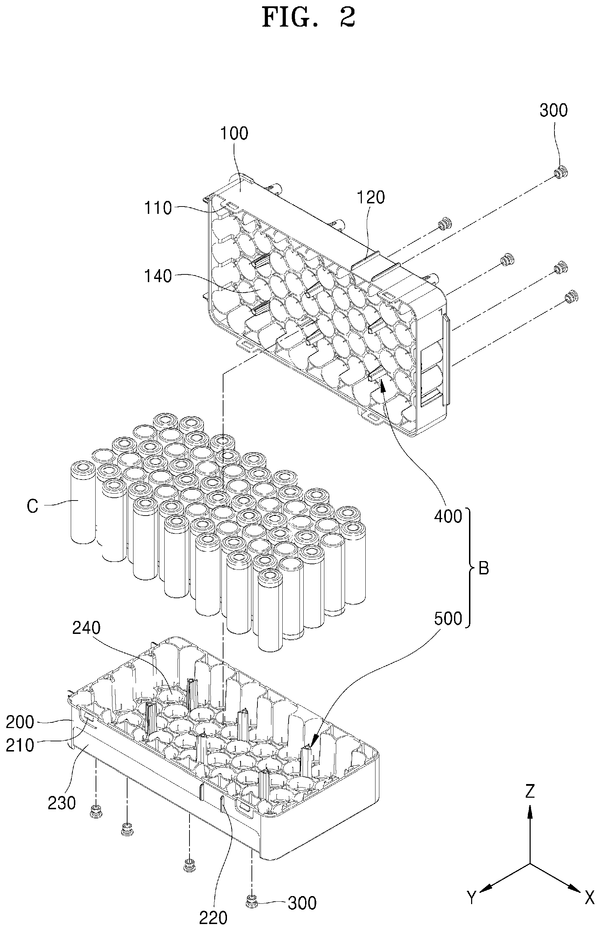

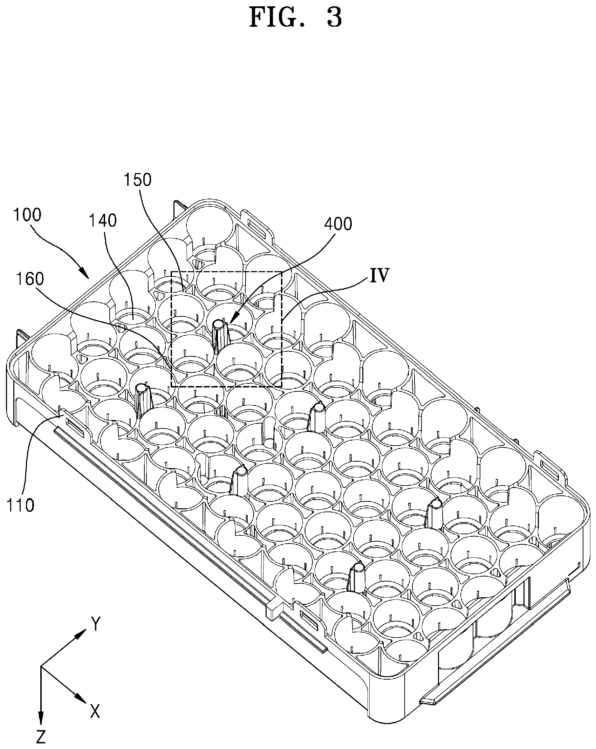

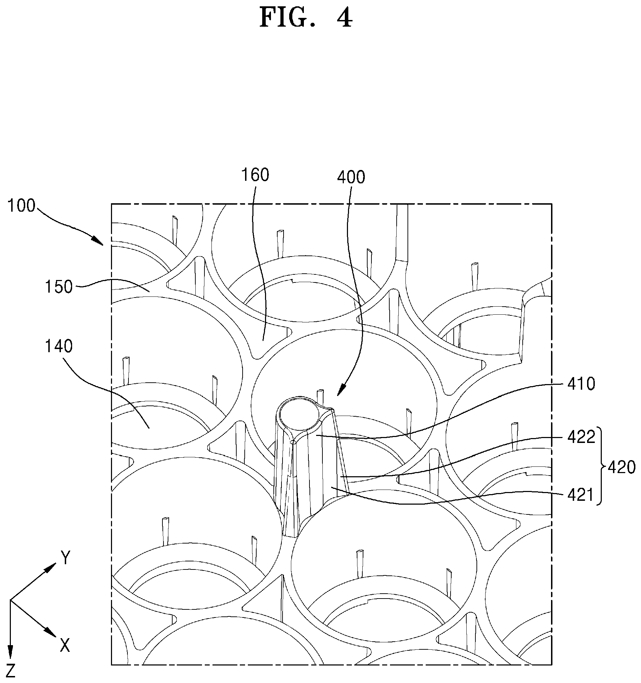

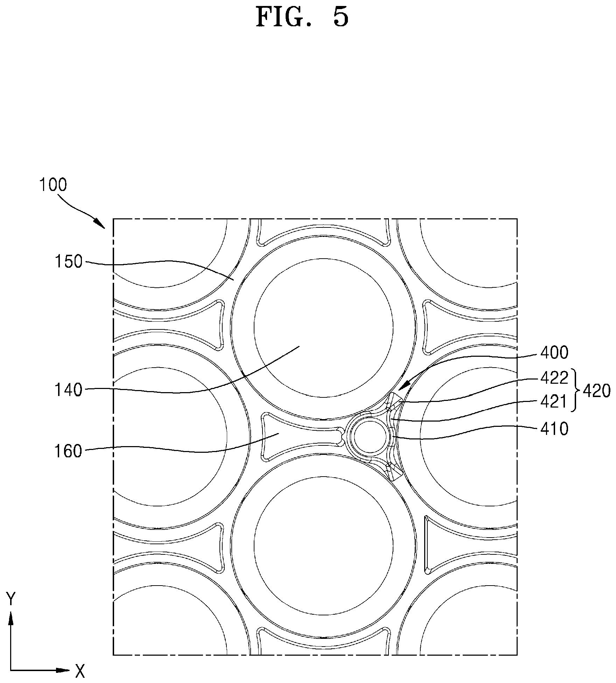

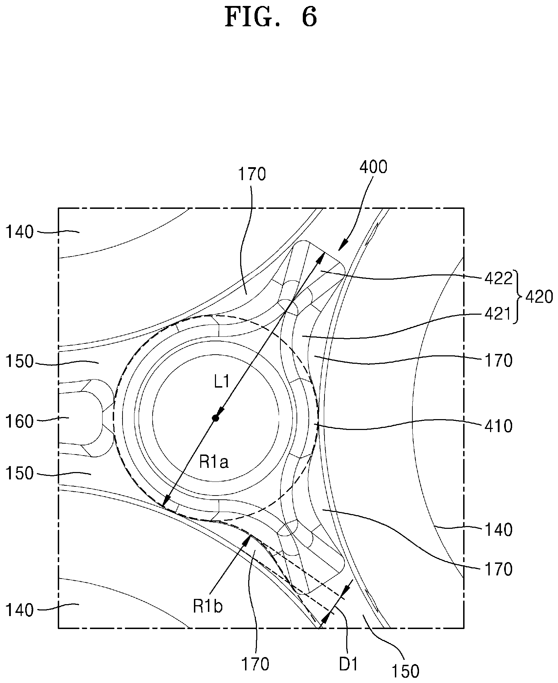

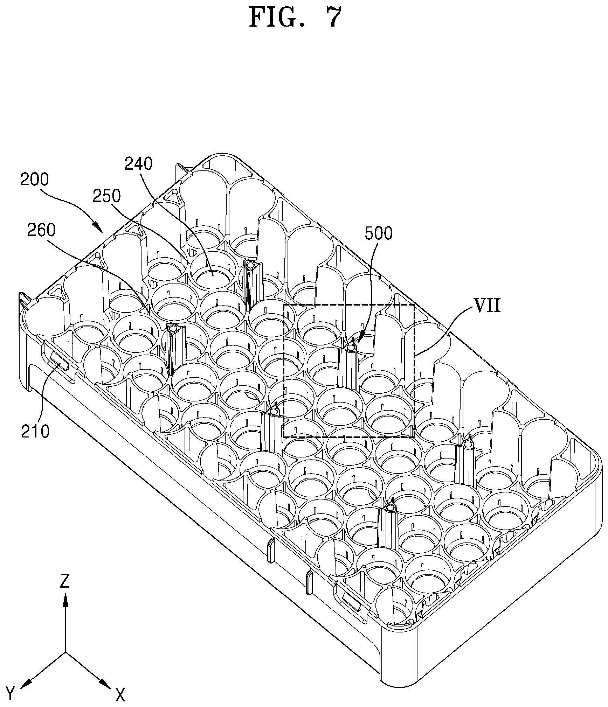

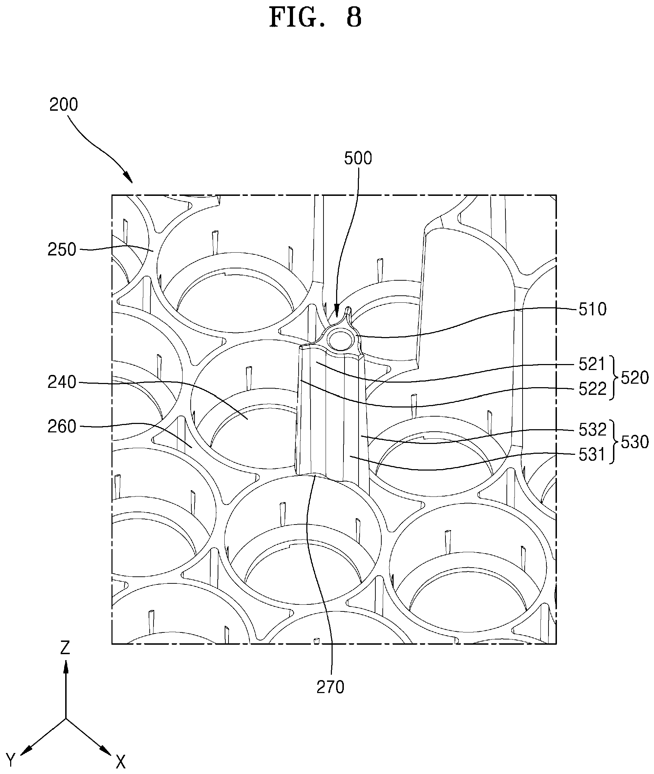

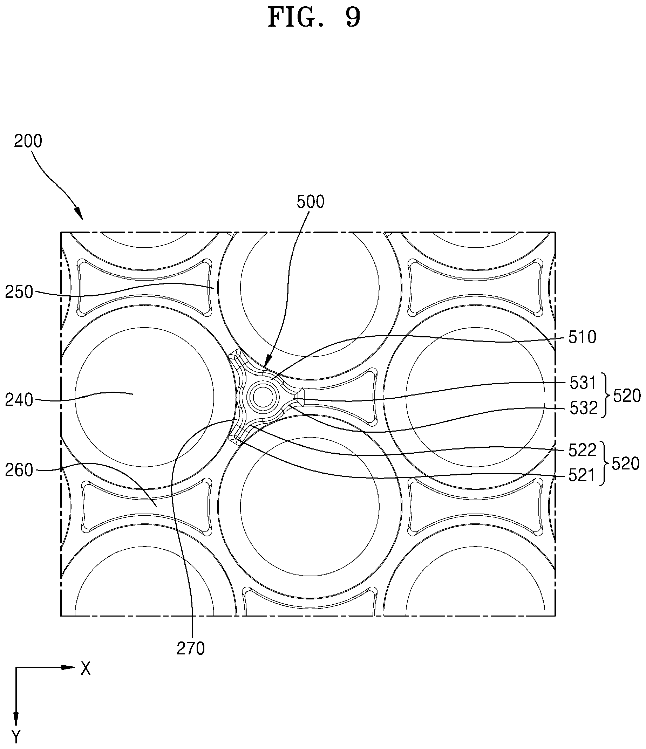

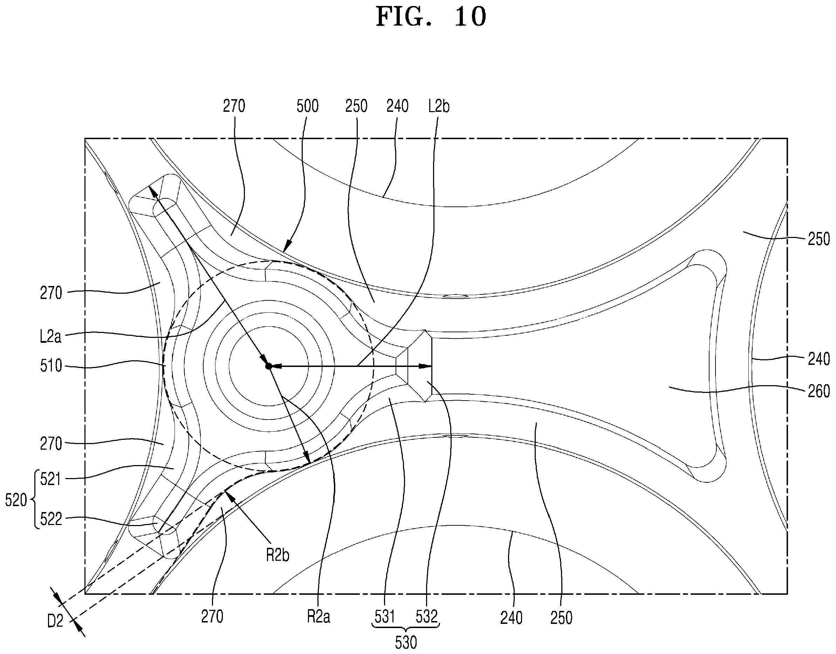

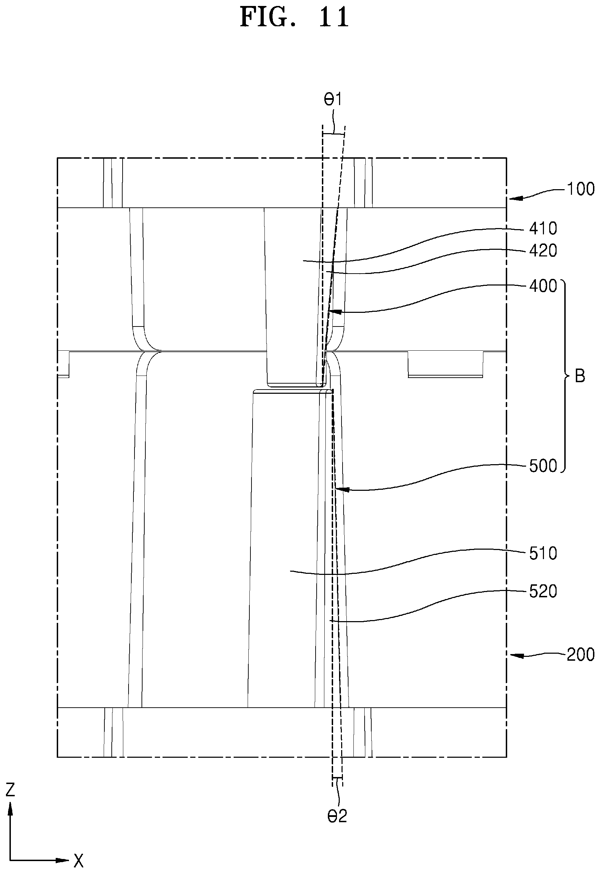

FIG. 1 shows a battery module 10 according to an embodiment, FIG. 2 shows an exploded view of the battery module 10, FIG. 3 depicts a first case 100, FIG. 4 depicts an enlarged portion IV of FIG. 3, FIG. 5 is a plan view of FIG. 4, FIG. 6 depicts an enlarged view of a first fastening protrusion 400, FIG. 7 depicts a second case 200, FIG. 8 depicts an enlarged view of a portion VII of FIG. 7, FIG. 9 is a plan view FIG. 8, FIG. 10 depicts an enlarged view of a second fastening protrusion 500, and FIG. 11 depicts a configuration in which the first case 100 and the second case 200 are connected to each other.

The battery module 10 includes a plurality of battery cells C and may be utilized in various types of applications. In one or more embodiments, a plurality of battery modules 10 may be included in a storage rack of a large application such as an energy storage system (ESS). In one or more embodiments, the battery module 10 may be included in a vehicle (e.g., an electric vehicle, a hybrid vehicle, a plug-in hybrid vehicle, etc.). In one or more embodiments, the battery module 10 may be utilized in small and medium-sized applications, such as power tools, smartphones, power banks, etc. The battery module 10 may be used alone, or a plurality of battery modules 10 may be electrically connected to each other to form a battery pack. The battery cell C may have one or more of a cylindrical shape, a pouch shape, and/or a prismatic shape. In one or more embodiments, a plurality of cylindrical battery cells C may be included in the battery module 10.

The battery module 10 includes the first case 100, the second case 200 connected to the first case 100, and bosses B (e.g., the first fastening protrusion(s) 400 and the second fastening protrusion(s) 500) formed in the first case 100 and the second case 200, respectively. Each of the bosses (e.g., 400 and 500) includes ribs (e.g., a first rib 420, a second rib 520, and a third rib 530). The boss(es) B in the first case 100 (e.g., the first fastening protrusion 400) and the boss(es) B in the second case 200 (e.g., the second fastening protrusion 500) are at positions corresponding to each other, extend toward each other, are connected to each other by a fastening member with at least some part(s) in contact with each other. The boss(es) B (e.g., 400 and 500) may include different numbers of ribs (e.g., 420, 520, and 530) from each other.

The battery module 10 may include the first case 100, the second case 200, a connector 300, bosses B (the first fastening protrusion 400 and the second fastening protrusion 500), a cell tab 600, a first bus bar 700, and a second bus bar 800.

The first case 100 may hold or support the battery cells C. In one or more embodiments, the first case 100 may be on the top of the battery module 10 and may include an opening and space into which a plurality of battery cells C are inserted. The first case 100 is detachably connected to the second case 200 and may form the opening and, together with the second case 200, the space into which the battery cells C are inserted. The first case 100 may be on the second case 200.

The first case 100 may include at least one first fastening unit 110, at least one first guide 120, at least one mounting protrusion 130, first openings 140, first partition walls 150, first grooves 160, first regions 170, and protrusions 180.

The first fastening unit 110 may extend from the first case 100, and a second fastening unit 210 of the second case 200 may be inserted into the first fastening unit 110. In one or more embodiments, one or more of the first fastening units 110 may be formed on both sides of the first case 100 (e.g., both sides corresponding to a lengthwise direction of the first case 100) and may extend downward. The first fastening unit 110 includes a hole therein, and the first case 100 and the second case 200 may be connected by inserting a protrusion of the second fastening unit 210 into the hole. In one or more embodiments, two first fastening units 110 may be formed on both sides of the second case 200 corresponding to the second fastening units 210. Each of the first fastening units 110 is seated in a groove of the second fastening unit 210, and the protrusion of the second fastening unit 210 may be inserted into the inside of the first fastening unit 110.

The first guide 120 may be formed in the first case 100, may determine mounting positions of the first bus bar 700 and the second bus bar 800, and support the first bus bar 700 and the second bus bar 800. In one or more embodiments, as shown in FIG. 1, at least one first guide 120 may be formed on one surface of the first case 100 (e.g., a surface of the first case 100 on which the first bus bar 700 is mounted or the first fastening unit 110 is formed). Two first guides 120 are spaced apart by a distance corresponding to a width of the first bus bar 700 and may extend in a height direction of the battery module 10 (e.g., the Z-axis direction in FIG. 1). The first bus bar 700 may be inserted between the two first guides 120. The first guide 120 may be at a position corresponding to the second guide 220 (e.g., the first guide 120 may be aligned or substantially aligned with the second guide 220). In one or more embodiments, two first guides 120 may be on the other surface of the first case 100 (e.g., a surface on which the second bus bar 800 is mounted), and the second bus bar 800 may be inserted between the corresponding two first guides 120.

The mounting protrusion 130 may be on the first case 100 and may be a portion where the first bus bar 700 and the second bus bar 800 are mounted. In one or more embodiments, as shown in FIG. 1, one or more mounting protrusions 130 may be formed on an upper surface of the first case 100. In one or more embodiments, one mounting protrusion 130 is on each long side of the first case 100, and each mounting protrusion 130 is connected to the first bus bar 700 and the second bus bar 800. The mounting protrusion(s) 130 protrudes upward from the upper surface of the first case 100 and may have a height greater than the cell tab 600 and less than the protrusion 180. When the first bus bar 700 and the second bus bar 800 are seated on the mounting protrusion 130, the connector 300 is inserted into the mounting protrusion 130, and thus, the first bus bar 700 and the second bus bar 800 may be fastened to the first case 100.

The first opening 140 may be formed in the first case 100 and may hold and support the battery cells C. In one or more embodiments, as shown in FIG. 2, the number of first openings 140 in the first case 100 may be equal to the number of battery cells C. The first opening 140, together with a second opening 240 of the second case 200, may form a region into which one of the battery cells C is inserted. The plurality of first openings 140 may form respective rows in a width direction of the first case 100 (e.g., the Y-axis direction in FIG. 3). The plurality of rows of the first openings 140 may be arranged to be staggered in a longitudinal direction of the first case 100 (e.g., the X-axis direction in FIG. 3), thereby forming a honeycomb structure.

Each of the first partition walls 150 may be around one of the first openings 140 and may defining the first opening 140 therein. In one or more embodiments, as shown in FIG. 3, the first partition wall 150 has a cylindrical shape with an empty interior and may extend downward from one surface of the first case 100 (e.g., an inner upper surface of the first case 100). The first opening 140 having a circular shape may be inside the first partition wall 150. The first partition wall 150 may extend in a height direction of the first case 100 (e.g., the Z-axis direction in FIG. 3) so that the battery cell C is accommodated in the first opening 140. The first partition wall 150 formed around one first opening 140 may contact the first partition wall 150 formed around another adjacent first opening 140. In one or more embodiments, as shown in FIG. 3, ends of the plurality of adjacent first partition walls 150 (e.g., a bottom surface of the first partition wall 150) may have a flat surface, and the first fastening protrusion 400 may extend upward (e.g., the z-axis direction) from the flat surface.

One or more first grooves 160 may be formed in the first case 100 between a plurality of adjacent first partition walls 150. The first groove 160 may form a step with an end of the first partition wall 150. A bottom surface of the first groove 160 may be an inner upper surface of the first case 100 or a surface protruding from the inner upper surface by a predetermined height in the height direction (e.g., the z-axis direction) of the first case 100. The first groove 160 may separate the plurality of first partition walls 150 from each other to prevent (or at least mitigate against) a material filled between the plurality of first partition walls 150 from deforming, thereby improving the durability of the first case 100. In one or more embodiments, a plurality of first grooves 160 may be formed between the plurality of first partition walls 150 in the longitudinal direction of the first case 100 (e.g., the Y-axis direction in FIG. 3) and/or in the width direction of the first case 100 (e.g., the X-axis direction in FIG. 3). The first groove 160 may not overlap the first fastening protrusion 400.

Each of the first regions 170 may be between one of the first partition walls 150 and one of the first fastening protrusions 400. In one or more embodiments, as shown in FIG. 6, the first region 170 may be at the end of the first partition wall 150 and may be a region defined by an outer edge of the first partition wall 150 and an outer edge of the first fastening protrusion 400 (e.g., a first concave unit 421 of the first fastening protrusion 400). The first fastening protrusion 400 is not formed on the first region 170, and the first partition wall 150 may be exposed. Because the first region 170 does not overlap the first fastening protrusion 400, the first fastening protrusion 400 may not interfere with the battery cell C during a process of inserting the battery cell C into the first opening 140. The first region 170 may have a concave shape to correspond to the shape of the first concave unit 421 of the first fastening protrusion 400 and may be spaced apart from the edge of the first partition wall 150 by a maximum distance D1. The distance D1 may be in a range from about (approximately) 20% to about (approximately) 40% of the total width of the first concave unit 421. If the ratio is less than approximately 20%, the first concave unit 421 may be too close to the edge of the first partition wall 150, and thus, a material corresponding to the first concave unit 421 may deviate to the outside of the first partition wall 150 in a process of forming the first case 100 (e.g., molding) or interference with the first concave unit 421 may occur when the battery cell C is inserted into the first opening 140. If the ratio exceeds approximately 40%, a width of the first concave unit 421 may be too narrow and the durability of the first rib 420 may deteriorate. An outline of an inner side of the first region 170 (e.g., the first concave unit 421 side) may include a curve that smoothly continues from an outer circumferential surface of a first body 410 of the first fastening protrusion 400.

The protrusion(s) 180 is/are on the first case 100 and may connect the battery module 10 to other devices. In one or more embodiments, as shown in FIG. 1, one or more protrusions 180 are formed on the upper surface of the first case 100 and may have a hollow shape so that fastening members, such as bolts or screws, may be inserted therein. A plurality of protrusions 180 may be formed along an edge of the upper surface of the first case 100 (e.g., the long side of the first case 100) so as not to overlap the first openings 140 and the cell tab 600. Each of the protrusion(s) 180 may include a cylindrical body and one or more ribs formed on the outer circumferential surface of the cylindrical body. The rib(s) may have a height less than the cylindrical body.

The first case 100 may include fastening holes 190. In one or more embodiments, as shown in FIG. 1, a plurality of fastening holes 190 may be in the upper surface of the first case 100. Each of the fastening hole(s) 190 does not overlap the first openings 140 and the cell tab 600 and may correspond to one of the first fastening protrusions 400. Therefore, when the first case 100 and the second case 200 are connected to each other, a fastening member may be inserted into the fastening hole 190 such that the fastening member connects the first fastening protrusion 400 and the second fastening protrusion 500 together.

The second case 200 may hold or support the battery cells C. In one or more embodiments, the second case 200 is on a lower side of the battery module 10 and may include openings and spaces into which the plurality of battery cells C are accommodated. The second case 200 is configured to be attached and detached to and from the first case 100 and, together with the first case 100, may form openings and spaces into which the plurality of battery cells C are accommodated.

The second case 200 may include second fastening units 210, at least one second guide 220, a mounting surface 230, second openings 240, second partition walls 250, and second grooves 260.

The second fastening unit 210 is on the second case 200 and is configured to be fastened to the first fastening unit 110. In one or more embodiments, one or more second fastening units 210 may be formed on both sides of the second case 200 (e.g., both sides corresponding to the lengthwise direction of the second case 200). The second fastening unit 210 may have a concave shape on the side of the second case 200 and may form a step with the side of the second case 200. The second fastening unit 210 may include a groove having a size and shape corresponding to the first fastening part 110 and a protrusion protruding from the groove. When the first fastening unit 110 is seated in the groove of the second fastening unit 210, the protrusion is inserted into the hole of the first fastening unit 110, and thus the first fastening unit 110 and the second fastening unit 210 may be fastened together.

The second guide 220 may be in the second case 200, may determine mounting positions of the first bus bar 700 and the second bus bar 800, and may support the first bus bar 700 and the second bus bar 800. In one or more embodiments, as shown in FIG. 1, one or more of the second guides 220 may be formed on one surface of the second case 200 (e.g., the surface on which the first bus bar 700 is mounted or the surface on which the first fastening unit 110 is formed). The two second guides 220 are spaced apart by a distance corresponding to a width of the first bus bar 700 and may extend in the height direction of the battery module 10 (for example, the Z-axis direction in FIG. 1). The first bus bar 700 may be inserted between the two second guides 220. Each of the second guides 220 may be formed to correspond to each of the first guides 120 (e.g., the second guides 220 may be aligned with the first guides 120). In one or more embodiments, two second guides 220 may be formed on the other surface of the second case 200 (e.g., a surface on which the second bus bar 800 is mounted), and thus, the second bus bar 800 may be inserted between the corresponding two second guides 220.

The mounting surface 230 on the second case 200 may be concave on one surface of the second case 200 so that the first bus bar 700 is mounted. In one or more embodiments, as shown in FIG. 1, one or more of the second guides 220 may be formed on one surface of the second case 200 (e.g., the surface on which the first bus bar 700 is mounted or the surface on which the first fastening unit 110 is formed).

The second openings 240 may be in the second case 200 and may hold and support the battery cells C. In one or more embodiments, as shown in FIG. 2, the second openings 240 may be formed in the second case 200 and the number of second openings 240 may be the same as the number of battery cells C. Each second opening 240, together with one of the corresponding first openings 140 of the first case 100, may form a region into which the battery cell C is inserted. The plurality of second openings 240 may form respective rows in a width direction of the second case 200 (e.g., the Y-axis direction in FIG. 7). The plurality of rows of the second openings 240 may be arranged to be staggered in the longitudinal direction of the second case 200 (e.g., the X-axis direction in FIG. 7), thereby forming a honeycomb structure.

Each of the second partition walls 250 may be formed around one of the second openings 240 and may define the second opening 240 therein. In one or more embodiments, as shown in FIG. 7, the second partition wall 250 has a cylindrical shape with an empty or hollow interior and extends upward (e.g., in the z-axis direction) from one surface of the second case 200 (e.g., an inner lower surface of the second case 200). A circular second opening 240 may be inside the second partition wall 250. Each of the second partition walls 250 may extend in the height direction of the second case 200 (e.g., the Z-axis direction in FIG. 7) so that the battery cell C is inserted into the second opening 240. The second partition wall 250 around any one second openings 240 may contact the second partition wall 250 around another adjacent second opening 240. In one or more embodiments, as shown in FIG. 7, ends of the plurality of adjacent second partition walls 250 (e.g., a bottom surface of the second partition wall 250) form a flat surface, and the one or more second fastening protrusions 500 may extend upward (e.g., in the z-axis direction) from the flat surface.

One or more second grooves 260 may be formed in the second case 200 and may be formed between the plurality of adjacent second openings 240. Each of the second grooves 260 may form a step with the end of the second partition wall 250. A bottom surface of the second groove 260 may be an inner upper surface of the second case 200 or a surface protruding by a predetermined height from the inner upper surface of the second case 200 in the height direction (e.g., the z-axis direction). The second grooves 260 may separate the plurality of second openings 240 from each other to prevent or at least mitigate a material filled between the plurality of second partition walls 250 from deforming, thereby improving the durability of the second case 200. In one or more embodiments, a plurality of second grooves 260 may be formed between the plurality of partition walls 250 in the longitudinal direction of the second case 200 (e.g., the Y-axis direction in FIG. 7) and/or in the width direction of the second case 200 (e.g., the X-axis direction in FIG. 7). The second grooves 260 may not overlap the one or more second fastening protrusions 500.

One of the second grooves 260 may support one of the second fastening protrusions 500. In one or more embodiments, as shown in FIG. 8, a portion of the second fastening protrusion 500 (e.g., at least a portion of the third rib 530 of the second fastening protrusion 500) may be accommodated in the second groove 260. Because a portion of the second fastening protrusion 500 extends from the bottom surface of the second groove 260, it is possible to prevent or at least mitigate the second fastening protrusion 500 from being damaged due to torque generated when the first fastening protrusion 400 and the second fastening protrusion 500 are fastened together by the fastening member.

A second region 270 may be formed between each of the second partition walls 250 and each of the corresponding second fastening protrusions 500. In one or more embodiments, as shown in FIG. 10, the second region 270 may be formed at an end of the second partition wall 250 and may be a region defined by an outer edge of the second partition wall 250 and an outer edge of the second fastening protrusion 500 (for example, the second concave unit 521). The second fastening protrusion 500 is not formed on the second region 270, and the second partition wall 250 may be exposed. Because the second region 270 does not overlap the second fastening protrusion 500, the second fastening protrusion 500 may not interfere with the battery cell C during a process of inserting the battery cell C into the second opening 240. The second region 270 may have a concave shape to correspond to the shape of the second concave unit 521 of the second fastening protrusion 500 and may be spaced apart from the edge of the second partition wall 250 by a maximum distance D2. The distance D2 may be in a range from about (approximately) 20% to about (approximately) 40% of the total width of the second concave portion 521. If the ratio is less than approximately 20 %, the second concave unit 521 may be too close to the edge of the second partition wall 250, and thus a material corresponding to 521 may deviate to the outside of the second partition wall 250, in a process of forming the second case 200 (e.g., molding) and/or interference with the second concave unit 521 may occur when the battery cell C is inserted into the second opening 240. If the ratio exceeds approximately 40%, a width of the second concave unit 521 may become too narrow and the durability of the second rib 520 may deteriorate. An outline of an inner side of the second region 270 (e.g., the second concave unit 521 side) may include a curve that smoothly continues from an outer circumferential surface of a second body 510 of the second fastening protrusion 500.

One or more connectors 300 may be connected to the first case 100 and the second case 200 and may connect the first bus bar 700 and the second bus bar 800 to the first case 100 and the second case 200, respectively. Additionally, the connector 300 may physically and electrically connect the first bus bar 700 and the second bus bar 800 to the cell tab 600. In one or more embodiments, each of the connectors 300 may be a bolt including a conductive material (e.g., metal). In a configuration in which the first bus bar 700 is positioned to correspond to the mounting protrusion 130 and the cell tab 600, the first bus bar 700 may be coupled (e.g., fixed) on the first case 100 by inserting the connector 300 into the mounting protrusion 130. Also, the connector 300 may be inserted into one or more holes formed in the first case 100 (e.g., one or more holes formed along the lengthwise direction of the first case 100 in FIG. 1) and may contact the cell tab 600. Therefore, the second bus bar 800 may be connected to the cell tab 600. In one or more embodiments, the second case 200 may also include a mounting protrusion to which the connector 300 is connected and one or more holes for physically and electrically connecting the cell tab 600 to the first bus bar 700.

At least one boss B may be in each of the first case 100 and the second case 200. The boss (400) of the first case (100) may be referred to a first boss, whereas the boss (500) of the second case (200) may be referred to a second boss. The first case 100 and the second case 200 may be fastened by inserting fastening members, such as bolts or screws, into the boss(es) B. In one or more embodiments, the boss B may be on the inner upper surface of the first case 100 and the inner lower surface of the second case 200, respectively, and the ends of the first case 100 and the second case 200 may come into contact with each other when the first case 100 and the second case 200 are fastened to each other. In one or more embodiments, as shown in FIG. 2, the boss B in the first case 100 may extend downward (e.g., in the z-axis direction) from the inner upper surface of the first case 100. Additionally, the boss B formed in the second case 200 may extend upward (e.g., in the z-axis direction) from the inner lower surface of the second case 200. The boss B formed in the first case 100 may be at a position corresponding to the boss B in the second case 200. The boss B may include ribs. One or more ribs may be on an outer circumferential surface of each boss B. The rib is on the first partition wall 150 of the first case 100 and the second partition wall 250 of the second case 200 and may not overlap the first opening 140 and the second opening 240 in the first case 100 and the second case 200, respectively.

The boss B on the second case 200 (e.g., the second fastening protrusion 500) may include a greater number of ribs than the boss B on the first case 100 (e.g., the first fastening protrusion 400). That is, the number of second ribs 520 and third ribs 530 included in any one of the second fastening protrusions 500 may be greater than the number of first ribs 420 included in any one of the first fastening protrusions 400.

The first case 100 and the second case 200 may include an opening into which the battery cell C is inserted (e.g., the first opening 140 and the second opening 240) and a partition wall defining the opening (e.g., the first partition wall 150 and the second partition wall 250). Also, the bosses B (e.g., the first fastening protrusions 400 and second fastening protrusions 500) may be formed at ends of a plurality of adjacent partition walls and may be located between adjacent ones of the plurality of openings.

The ribs (e.g., the first rib 420, the second rib 520, and the third rib 530) may be formed continuously along an entire height direction (e.g., the z-axis direction) of the boss B (e.g., the first fastening protrusion 400 and the second fastening protrusion 500) and may extend parallel (or substantially parallel) to the height direction (e.g., the z-axis direction) of the boss B.

An upper surface of the rib (e.g., the first rib 420, the second rib 520, and the third rib 530) may be at the same height (or substantially the same height) as an upper surface of the boss B (e.g., the first fastening protrusion 400 and the second fastening protrusion 500).

The ribs (e.g., the first rib 420, the second rib 520, and the third rib 530) may include a curved unit (e.g., a first concave unit 421, a second concave unit 521, and a third concave unit 531) that curves from the outer circumferential surface of the boss (e.g., the first fastening protrusion 400 and the second fastening protrusion 500) and is spaced inward from the edge of the partition wall (e.g., the first partition wall 150 and the second partition wall 250). Also, an end of the partition wall (e.g., 150 and 250) corresponding to the curved unit may be exposed.

The curved unit (e.g., the first concave unit 421, the second concave unit 521, and the third concave unit 531) may have a curvature different from that of the outer circumferential surface of the boss B (e.g., the first fastening protrusion 400 and the second fastening protrusion 500).

The ribs (e.g., the first rib 420, the second rib 520, and the third rib 530) may have a shape tapered upward in a direction (e.g., the z-axis direction) of a height of the boss B (e.g., the first fastening protrusion 400 and the second fastening protrusion 500).

The boss B may include the first fastening protrusion 400 and the second fastening protrusion 500.

One or more first fastening protrusions 400 may be on the first case 100. In one or more embodiments, as shown in FIG. 3, the plurality of first fastening protrusions 400 may extend in the height direction of the first case 100 (e.g., the Z-axis direction of FIG. 3) from one surface (e.g., the inner upper surface) of the first case 100. The first fastening protrusion 400 may extend from the ends of the plurality of adjacent first partition walls 150. In one or more embodiments, as shown in FIG. 3, the first fastening protrusion 400 may extend from a surface formed by three adjacent first partition walls 150. The first fastening protrusion 400 is between the plurality of first openings 140 each defining by a plurality of first partition walls 150 and may not overlap with each first opening 140. The first fastening protrusion 400 may be at a position corresponding to the second fastening protrusion 500.

The first fastening protrusion 400 may include the first body 410 and the first rib 420.

The first body 410 extends from the ends of the plurality of adjacent first partition walls 150 and may have a hollow cylindrical shape. The first body 410 includes a screw thread therein, and a fastening member may be inserted (screwed) into the first body 410 and may be fastened to the screw thread. In one or more embodiments, as shown in FIG. 6, the first body 410 may have a radius R1a. The first body 410 is within the first partition wall 150 and may not overlap the first groove 160. In one or more embodiments, as shown in FIG. 6, the outer circumferential surface of the first body 410 is circular with the radius R1a and may contact the edge of the first partition wall 150.

One or more of the first ribs 420 may be on the outer circumferential surface of the first body 410. In one or more embodiments, two first ribs 420 may be formed on the outer circumferential surface of the first body 410. The first rib 420 may be extend continuously from the end of the first partition wall 150 to the entire upper surface of the first body 410. That is, the first rib 420 is formed across the entire top and bottom of the first body 410, and thus the first fastening protrusion 400 may better withstand against torque generated during a fastening process. The first rib 420 may extend in parallel (or substantially parallel) to a height direction (e.g., the z-axis direction) of the first body 410 (e.g., the height direction of the first case 100). When a torque is applied in a process of fastening the first fastening protrusion 400 to the second fastening protrusion 500 with a fastening member, the first rib 420 may support the first fastening protrusion 400 so that the first fastening protrusion 400 is not damaged.

The first rib 420 may include an inclined portion. In one or more embodiments, as shown in FIG. 11, the first rib 420 may extend at an inclined angle θ1 with respect to the first body 410 (e.g., with respect to a central axis in a height direction of the first body 410). The first rib 420 may extend from a bottom surface of the first body 410 radially outward at an angle.

The first rib 420 may include at least a portion that is curved. In one or more embodiments, the first rib 420 may include a portion that is concavely curved inward from the outer circumferential surface of the first body 410. Therefore, a wide width of the portion where the first rib 420 extends from the first body 410 may be achieved. In addition, the first rib 420 curves along the outer circumferential surface of the first body 410, thereby increasing the durability of a connection portion between the first rib 420 and the first body 410.

The plurality of first ribs 420 on one first body 410 may be arranged asymmetrically with respect to the center of the first body 410. In one or more embodiments, as shown in FIG. 6, two first ribs 420 may be on one first body 410, and the two first ribs 420 may be asymmetrical with respect to the center of the first body 410. In one or more embodiments, an angle between the two first ribs 420 may be approximately 120 degrees. Compared to the second fastening protrusion 500, a relatively weak fastening torque may be applied to the first fastening protrusion 400. Accordingly, the weight of the battery module 10 may be reduced and the configuration of the battery module 10 may be simplified by minimizing (or at least reducing) the number of the first ribs 420 while securing the durability of the first fastening protrusion 400.

The first rib 420 may not overlap the first groove 160.

The first rib 420 may include the first concave unit 421 and a first support unit 422.

The first concave unit 421 is a portion where the first rib 420 extends from the first body 410 and may have a curved shape along the outer circumferential surface of the first body 410. In one or more embodiments, the first concave unit 421 may extend from both ends where the first rib 420 is connected to the first body 410 toward the first support unit 422 and may have an inwardly concave shape. In one or more embodiments, one first concave unit 421 may be formed on both sides of each first rib 420. The first concave unit 421 may have a curvature direction or sense that is different from that of the first body 410. In one or more embodiments in which the curvature of the outer circumferential surface of the first body 410 is positive, the first concave unit 421 may have a negative curvature. The first concave unit 421 may have a radius of curvature R1b which may be greater than or equal to the radius R1a of the first body 410. The first concave unit 421 may curve along the outer circumferential surface of the first body 410 and may be formed concave inwardly, and thus, the first concave unit 421 may be firmly connected to the first body 410 and, at the same time, an overall weight of the first fastening protrusion 400 may be reduced.

The first support unit 422 may extend from the end of the first partition wall 150 and may be connected to the two first concave units 421. The first support unit 422 may support the first concave unit 421. A distance from the center of the first body 410 to the end of the first support unit 422 is L1 which may be in a range from approximately 1.5 to approximately 3 times the radius R1a of the first body 410. If the ratio of the distance L1 to the radius Ra1 is less than approximately 1.5 it may be difficult for the first rib 420 to withstand the fastening torque applied to the first body 410. If the ratio exceeds approximately 3, excessive torque may be applied to the edge of the first rib 420 during a fastening process and thus the first rib 420 may be damaged.

One or more second fastening protrusions 500 may be on the second case 200. In one or more embodiments, as shown in FIG. 7, the plurality of second fastening protrusions 500 may extend from the surface of the second case 200 (e.g., the inner upper surface of the second case 200) in the height direction (e.g., the Z-axis direction of in FIG. 7) of the second case 200. The second fastening protrusion 500 may extend from the ends of the plurality of adjacent second partition walls 250. In one or more embodiments, as shown in FIG. 7, the second fastening protrusion 500 may be on a surface where the ends of three adjacent second partition walls 250 contact one another (e.g., a junction between three adjacent second partition walls 250). The second fastening protrusion 500 is between a plurality of second openings 240 each defined by a plurality of second partition walls 250 and may not overlap with the second openings 240. The second fastening protrusion 500 may be formed at a position corresponding to the first fastening protrusion 400 (e.g., the second fastening protrusion 500 may be aligned with the first fastening protrusion 400).

The second fastening protrusion 500 may include the second body 510, the second rib 520, and the third rib 530.

The second body 510 may extend from the ends of the plurality of adjacent second partition walls 250 and may have a hollow cylindrical shape. The second body 510 includes a screw thread therein, and a fastening member may be inserted (screwed) into the second body 510 and may be fastened to the screw thread. In one or more embodiments, as shown in FIG. 10, the second body 510 may have an outer diameter R2a. The second body 510 is within the second partition wall 250 and may not overlap the second groove 260. In one or more embodiments, as shown in FIG. 10, the outer circumferential surface of the second body 510 is circular with a radius R2a and may contact the edge of the second partition wall 250.

One or more second ribs 520 may be on the outer circumferential surface of the second body 510. In one or more embodiments, two second ribs 520 may be formed on the outer circumferential surface of the second body 510. The second rib 520 may extend continuously from the end of the second partition wall 250 to an upper surface of the second body 510. That is, the second rib 520 may extend from the top to the bottom of the second body 510, and thus the second fastening protrusion 500 may better withstand against torque generated during a fastening process. The second rib 520 may extend parallel (or substantially parallel) to a height direction (e.g., the z-axis direction) of the second body 510 (e.g., the height direction of the second case 200). When receiving torque in a process of fastening the second fastening protrusion 500 and the first fastening protrusion 400 with a fastening member, the second rib 520 may support the second fastening protrusion 500 so that the second fastening protrusion 500 is not damaged.

The second rib 520 may include an inclined portion. In one or more embodiments, as shown in FIG. 11, the second rib 520 may be inclined at an angle θ2 with respect to the second body 510 (e.g., with respect to the central axis in the height direction of the second body 510). The second rib 520 may extend from a bottom of the second body 510 at an angle radially outward.

The second rib 520 may include at least a portion that is curved. In one or more embodiments, the second rib 520 may include a portion that is curved concavely inward from the outer circumferential surface of the second body 510. Therefore, a wide width of the portion where the second rib 520 extends from the second body 510 may be achieved. In addition, the second rib 520 curves along the outer circumferential surface of the second body 510, thereby increasing the durability of the connection portion between the second rib 520 and the second body 510.

The plurality of second ribs 520 on one second body 510 may be asymmetric with respect to the center of the second body 510. In one or more embodiments, as shown in FIG. 10, two second ribs 520 may be formed on one second body 510, and the two second ribs 520 may be asymmetric with respect to the center of the second body 510. In one or more embodiments, an angle between the two second ribs 520 may be approximately 120 degrees.

The second rib 520 may not overlap the second groove 260.

The second rib 520 may include a second concave unit 521 and a second support unit 522.

The second concave unit 521 is a portion where the second rib 520 extends from the second body 510 and may have a curved shape along the outer circumferential surface of the second body 510. In one or more embodiments, the second concave unit 521 may extend from both ends where the second rib 520 is connected to the second body 510 toward the second support unit 522 and may have an inwardly concave shape. In one or more embodiments, one second concave unit 521 may be formed on each side of the second rib 520. The second concave unit 521 may have a curvature direction or sense different from that of the second body 510. In one or more embodiments in which the curvature of the outer circumferential surface of the second body 510 is positive, the second concave unit 521 may have a negative curvature. The second concave unit 521 may have a radius of curvature R2b which may be greater than or equal to the radius R2a of the second body 510. The second concave unit 521 has an inwardly concave shape and curves along the outer circumferential surface of the second body 510, and thus, the second concave unit 521 may be firmly connected to the second body 510 and, at the same time, an overall weight of the second fastening protrusion 500 may be reduced.

The second support unit 522 may extend from the end of the second partition wall 250 and may be connected to the two second concave units 521. The second support unit 522 may support the second concave unit 521. A distance from the center of the second body 510 to the end of the second support unit 522 is L2a which may be in a range from approximately 1.5 to approximately 3 times the radius R2a of the second body 510. If the ratio of the distance L2a to the radius R2a is less than approximately 1.5, the second rib 520 may not have sufficient force to withstand the fastening torque applied to the second body 510. If the ratio of the distance L2a to the radius R2a exceeds approximately 3, excessive torque may be applied to the edge of the second rib 520 during a fastening process, thus, the second rib 520 may be damaged.

One or more third ribs 530 may be formed on the outer circumferential surface of the second body 510. In one or more embodiments, one third rib 530 may be on the outer circumferential surface of the second body 510. The third rib 530 may be in a part different from the part of the second body 510 where the second rib 520 is formed. In one or more embodiments, as shown in FIG. 10, the two second ribs 520 and one third rib 530 may be arranged at an equal or substantially equal angle (e.g., approximately 120 degrees) with respect to the center of the second body 510. Therefore, because the second fastening protrusion 500 includes a greater number of ribs (second rib 520 and third rib 530) than the first fastening protrusion 400, even if a greater fastening torque is applied to the second fastening protrusion 500 than the first fastening protrusion 400, the durability of the second fastening protrusion 500 may be achieved.

At least a portion of the third rib 530 may be formed within the second groove 260. In one or more embodiments, as shown in FIGS. 8 and 9, a portion of the third rib 530 may be at an end of the second partition wall 250, and the other portion thereof may be inside of the second groove 260 (e.g., on a bottom surface of the groove 260). The third rib 530 may be supported on side and bottom surfaces of the second groove 260. The third rib 530 may extend continuously from the end of the second partition wall 250 to the upper surface of the second body 510. That is, the third rib 530 may extend from the top to bottom of the second body 510, and thus the second fastening protrusion 500 may better withstand against torque generated during a fastening process. The second rib 520 may extend parallel (or substantially parallel) to a height (e.g., in the z-axis direction) of the second body 510. When receiving torque in a process of fastening the second fastening protrusion 500 and the first fastening protrusion 400 with a fastening member, the second rib 520 may support the second fastening protrusion 500 so that the second fastening protrusion 500 is not damaged.

The third rib 530 may have a length less than that of the second rib 520. In one or more embodiments, as shown in FIG. 10, a distance from the center of the second body 510 to an end of the third rib 530 is L2b, and the distance L2b may be less than a distance L2a from the center of the second body 510 to the end of the third rib 520. The distance L2b may be in a range from approximately 60% to approximately 90% of the distance L2a. If the ratio of the distance L2b to the distance L2a is less than approximately 60%, the effect of the third rib 530 in improving the durability of the second fastening protrusion 500 may be reduced. If the ratio of the distance L2b to the distance L2a exceeds approximately 90%, the length of the third rib 530 may be too long, and thus, the third rib 530 may be easily damaged when fastening torque is applied, and the amount of deformation of a material inside the second groove 260 may increase.

The third rib 530 may include a third concave unit 531 and a third support unit 532.

The third concave unit 531 is a portion where the third rib 530 extends from the second body 510 and may curve along the outer circumferential surface of the second body 510. In one or more embodiments, the third concave unit 531 may extend from both ends where the third rib 530 is connected to the second body 510 toward the third support unit 532 and may have an inwardly concave shape. In one or more embodiments, one third concave unit 531 may be formed on each side of the third rib 530. The third concave unit 531 may have a curvature direction or sense that is different from that of the second body 510. In one or more embodiments in which the curvature of the outer circumferential surface of the second body 510 is positive, the third concave unit 531 may have a negative curvature. The third concave unit 531 is formed in an inwardly concave shape and extends along the outer circumferential surface of the second body 510, and thus, the third concave unit 531 may be connected to the second body 510 and, at the same time, an overall weight of the second fastening protrusion 500 may be reduced.

The third support unit 532 may extend from the end of the second partition wall 250 and may be connected to the two third concave units 531. The third support unit 532 may support the third concave unit 531. A distance from the center of the second body 510 to an end of the third support unit 532 is L2b and may be in a range from approximately 1.2 to approximately 2 times the radius R2a of the second body 510. If the ratio of the distance L2b to the radius R2a is less than approximately 1.2, the third rib 530 may not have sufficient force to withstand fastening torque applied to the second body 510. If the ratio of the distance L2b to the radius R2a exceeds approximately 2, the third rib 530 may be damaged as excessive torque is applied to the edge of the third rib 530 during a fastening process.

FIG. 11 shows a configuration in which the first case 100 and the second case 200 are fastened to each other. In one or more embodiments, the second case 200 may be connected below the first case 100, and the first fastening protrusion(s) 400 and the second fastening protrusion(s) 500 may be connected to each other. A fastening member is inserted into the fastening hole 190 of the first case 100, and the fastening member may be inserted into the first fastening protrusion 400 and the second fastening protrusion 500, and thus, the first fastening protrusion 400 and the second fastening protrusion 500 may be fastened to each other. A lower end of the first fastening protrusion 400 and an upper end of the second fastening protrusion 500 may be in contact (e.g., direct contact) with each other.

The cell tab 600 may connect the plurality of battery cells C together. In one or more embodiments, as shown in FIG. 1, a plurality of cell tabs 600 are placed on the first case 100 and may be connected to a plurality of battery cells C exposed through the first openings 140 of the first case 100. The cell tab 600 may electrically connect battery cells C of the same polarity to each other among the plurality of battery cells C. The cell tab 600 includes a connection unit extending toward the first opening 140, and the connection unit may contact an electrode unit of the battery cell C. In one or more embodiments, the plurality of cell tabs 600 are located on a bottom of the second case 200, and each may be electrically connected to one of the plurality of battery cells C exposed through the second openings 240.

The first bus bar 700 and the second bus bar 800 may be electrically connected to the plurality of battery cells C through the cell tabs 600. In one or more embodiments, the top of the first bus bar 700 is on the mounting protrusion 130 of the first case 100 and may be fastened to the mounting protrusion 130 through the connector 300. Also, the first bus bar 700 may be connected to the cell tab 600 by being fastened to a plurality of holes formed along an edge (e.g., the lengthwise side) of the first case 100 through the connector 300. The first bus bar 700 may be inserted between the two first guides 120 and the two second guides 220 of the first case 100 and the second case 200, respectively, and mounted on the mounting surface 230. In addition, the first bus bar 700 may be connected to the cell tabs 600 by being fastened to a plurality of holes located on the bottom of the second case 200 and formed along the edge (e.g., the lengthwise side) of the second case 200.

In one or more embodiments, an upper edge of the second bus bar 800 is on the mounting protrusion 130 of the first case 100 and may be fastened to the mounting protrusion 130 through the connector 300. In addition, the second bus bar 800 may be connected to the cell tabs 600 by being fastened to a plurality of holes formed along the edge (e.g., the lengthwise side) of the first case 100 through the connector 300. The second bus bar 800 may be inserted between the two first guides 120 and the two second guides 220 of the first case 100 and the second case 200, respectively, and may be mounted on the mounting surface 230 opposite to the mounting surface 230 on which the first bus bar 700 is mounted. In addition, the second bus bar 800 may be connected to the cell tabs 600 by being fastened to a plurality of holes located on the bottom of the second case 200 and formed along the edge (e.g., the lengthwise side) of the second case 200. The first bus bar 700 and the second bus bar 800 may include a conductive material such as a metal and may electrically connect the battery module 10 to another battery module 10.

The battery module according to embodiments may increase the rigidity of the fastening protrusion into which a fastening member is inserted, while simplifying the configuration for increasing the rigidity of the fastening protrusion and reducing a weight of the fastening protrusion and the battery module including the fastening protrusion.

However, the effects that may be achieved through the present disclosure are not limited to the above-mentioned effects, and other technical effects not mentioned may be clearly understood by those skilled in the art from the description of the disclosure described below.

While the present disclosure has been described with reference to the embodiments shown in the drawings, these are merely examples. It will be understood by those of ordinary skill in the art that various changes in form and details may be made therein without departing from the scope of the appended claims.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the following claims.

## Claims

1. A battery module (10) comprising:
a first case (100);
a second case (200) connected to the first case (100);
a first boss (400) on the first case (100), the first boss comprising at least one first rib (420); and
a second boss (500) on the second case (200), the second boss comprising at least one second rib (520),
wherein the first boss (400) on the first case (100) and the second boss (500) on the second case (200) are at positions corresponding to each other, extend toward each other, are configured to be connected to each other by a fastening member in a configuration in which at least some portion of the first boss and the second boss are in contact with each other, and
**characterized in that**
a number of the at least one first rib (420) is different than a number of the at least one second rib (520).

2. The battery module (10) as claimed in claim 1, wherein the number of the at least one second rib (520) is greater than the number of the at least one first rib (420) on the first case (100).

3. The battery module (10) as claimed in claim 1 or 2, wherein the first case (100) and the second case (200) each comprise:
a plurality of openings accommodating a plurality of battery cells; and
a plurality of partition walls defining the plurality of openings,
wherein the first boss of the first case (100) and the second boss of the second case (200) are at ends of adjacent partition walls of the plurality of partition walls and are between the plurality of openings.

4. The battery module (10) as claimed in any of the preceding claims, wherein the at least one first rib (420) extends continuously along a height direction of the first boss and extends parallel to the height direction of the first boss.

5. The battery module (10) as claimed in any of the preceding claims, wherein an upper surface of the at least one first rib (420) is at a same height as an upper surface of the first boss.

6. The battery module (10) as claimed in any of claims 3 to 5,
wherein the at least one first rib (420) comprises a curved unit extending from an outer circumferential surface of the first boss and spaced inward from an edge of one of the plurality of partition walls, and
wherein an end of the one of the plurality of partition walls corresponding to the curved unit is exposed.

7. The battery module (10) as claimed in claim 6, wherein the curved unit has a curvature direction different from a curvature direction of the outer circumferential surface of the first boss.

8. The battery module (10) as claimed in any of the preceding claims, wherein the at least one first rib (420) tapers in a height direction of the first boss.

9. The battery module (10) as claimed in any of the preceding claims,
wherein the first boss (400) comprises:
a first fastening protrusion (400) on the first case (100), the first fastening protrusion (400) comprising a first body (410) and the at least one first rib (420) on an outer circumferential surface of the first body (410), and
wherein the second boss (500) comprises:
a second fastening protrusion (500) on the second case (200), the second fastening protrusion (500) comprising a second body (510), the at least one second rib (520) on an outer circumferential surface of the second body (510), and a third rib (530) on the outer circumferential surface of the second body (510) at a different position from the at least one second rib (520).

10. The battery module (10) as claimed in claim 9,
wherein the at least one first rib (420) comprises a plurality of first ribs (420) are on the outer circumferential surface of the first body (410), and
wherein the plurality of first ribs (420) are asymmetric with respect to a center of the first body (410).

11. The battery module (10) as claimed in claim 10, wherein the first case (100) comprises:
a plurality of first openings (140) accommodating a plurality of battery cells;
a plurality of first partition walls (150) defining the plurality of first openings (140);
and
a plurality of first grooves (160) between the plurality of first partition walls (150), wherein the first body (410) is at ends of the plurality of first partition walls (150), and wherein the plurality of first ribs (420) do not overlap the plurality of first grooves (160).

12. The battery module (10) as claimed in any of claims 9 to 11,
wherein the at least one second rib (520) comprises a plurality of second ribs (520) on the outer circumferential surface of the second body (510), and
wherein the plurality of second ribs (520) are asymmetric with respect to a center of the second body (510).

13. The battery module (10) as claimed in claim 12, wherein the second case (200) comprises:
a plurality of second openings (240) accommodating a plurality of battery cells;
a plurality of second partition walls (250) defining the plurality of second openings (240); and
a second groove (260) between the plurality of second partition walls (250),
wherein the second body (510) is at ends of the plurality of second partition walls (250),
wherein the plurality of second ribs (520) do not overlap the second groove (260), and
wherein at least a portion of the third rib (530) is in the second groove (260).

14. The battery module (10) as claimed in any of claims 9 to 13, wherein the at least one second rib (520) and the third rib (530) are arranged at an equal angle in a circumferential direction of the second body (510).

15. The battery module (10) as claimed in any of claims 9 to 14, wherein the third rib (530) has a length less than a length of each of the at least one second rib (520).

## Patentansprüche

1. Batteriemodul (10), umfassend:
ein erstes Gehäuse (100);
ein zweites Gehäuse (200), das mit dem ersten Gehäuse (100) verbunden ist;
einen ersten Dom (400) an dem ersten Gehäuse (100), wobei der erste Dom (400) mindestens eine erste Rippe (420) umfasst; und
einen zweiten Dom (500) an dem zweiten Gehäuse (200), wobei der zweite Dom mindestens eine zweite Rippe (520) umfasst,
wobei der erste Dom (400) an dem ersten Gehäuse (100) und der zweite Dom (500) an dem zweiten Gehäuse (200) an einander entsprechenden Positionen liegen, sich zueinander erstrecken, dazu eingerichtet sind, durch ein Befestigungselement in einer Konfiguration miteinander verbunden zu werden, in der zumindest ein Teil des ersten Doms und des zweiten Doms in Kontakt miteinander stehen, und
**dadurch gekennzeichnet, dass**
eine Anzahl der mindestens einen ersten Rippe (420) verschieden von einer Anzahl der mindestens einen zweiten Rippe (520) ist.

2. Batteriemodul (10) nach Anspruch 1, wobei die Anzahl der mindestens einen zweiten Rippe (520) größer als die Anzahl der mindestens einen ersten Rippe (420) an dem ersten Gehäuse (100) ist.

3. Batteriemodul (10) nach Anspruch 1 oder 2, wobei das erste Gehäuse (100) und das zweite Gehäuse (200) jeweils Folgendes umfassen:
eine Vielzahl von Öffnungen, die eine Vielzahl von Batteriezellen aufnehmen; und
eine Vielzahl von Trennwänden, welche die Vielzahl von Öffnungen definieren,
wobei sich der erste Dom des ersten Gehäuses (100) und der zweite Dom des zweiten Gehäuses (200) an Enden von benachbarten Trennwänden der Vielzahl von Trennwänden befinden und zwischen der Vielzahl von Öffnungen liegen.

4. Batteriemodul (10) nach einem der vorhergehenden Ansprüche, wobei sich die mindestens eine erste Rippe (420) kontinuierlich entlang einer Höhenrichtung des ersten Doms erstreckt und sich parallel zu der Höhenrichtung des ersten Doms erstreckt.

5. Batteriemodul (10) nach einem der vorhergehenden Ansprüche, wobei sich eine obere Fläche der mindestens einen ersten Rippe (420) auf einer gleichen Höhe wie eine obere Fläche des ersten Doms befindet.

6. Batteriemodul (10) nach einem der Ansprüche 3 bis 5,
wobei die mindestens eine erste Rippe (420) eine gekrümmte Einheit umfasst, die sich von einer Außenumfangsfläche des ersten Doms erstreckt und nach innen beabstandet von einer Kante einer der Vielzahl von Trennwänden angeordnet ist, und
wobei ein Ende der einen der Vielzahl von Trennwänden, das der gekrümmten Einheit entspricht, freigelegt ist.

7. Batteriemodul (10) nach Anspruch 6, wobei die gekrümmte Einheit eine Krümmungsrichtung aufweist, die verschieden von einer Krümmungsrichtung der Außenumfangsfläche des ersten Doms ist.

8. Batteriemodul (10) nach einem der vorhergehenden Ansprüche, wobei sich die mindestens eine erste Rippe (420) in einer Höhenrichtung des ersten Doms verjüngt.

9. Batteriemodul (10) nach einem der vorhergehenden Ansprüche,
wobei der erste Dom (400) Folgendes umfasst:
einen ersten Befestigungsvorsprung (400) an dem ersten Gehäuse (100), wobei der erste Befestigungsvorsprung (400) einen ersten Körper (410) und die mindestens eine erste Rippe (420) an einer Außenumfangsfläche des ersten Körpers (410) umfasst, und
wobei der zweite Dom (500) Folgendes umfasst:
einen zweiten Befestigungsvorsprung (500) an dem zweiten Gehäuse (200), wobei der zweite Befestigungsvorsprung (500) einen zweiten Körper (510), die mindestens eine zweite Rippe (520) an einer Außenumfangsfläche des zweiten Körpers (510) und eine dritte Rippe (530) an der Außenumfangsfläche des zweiten Körpers (510) an einer unterschiedlichen Position von der mindestens einen zweiten Rippe (520) umfasst.

10. Batteriemodul (10) nach Anspruch 9,
wobei die mindestens eine erste Rippe (420) eine Vielzahl von ersten Rippen (420) umfasst, die sich an der Außenumfangsfläche des ersten Körpers (410) befinden, und
wobei die Vielzahl von ersten Rippen (420) asymmetrisch in Bezug auf eine Mitte des ersten Körpers (410) sind.

11. Batteriemodul (10) nach Anspruch 10, wobei das erste Gehäuse (100) Folgendes umfasst:
eine Vielzahl von ersten Öffnungen (140), die eine Vielzahl von Batteriezellen aufnehmen;
eine Vielzahl von ersten Trennwänden (150), welche die Vielzahl von ersten Öffnungen (140) definieren; und
eine Vielzahl von ersten Nuten (160) zwischen der Vielzahl von ersten Trennwänden (150), wobei sich der erste Körper (410) an Enden der Vielzahl von ersten Trennwänden (150) befindet, und wobei die Vielzahl von ersten Rippen (420) die Vielzahl von ersten Nuten (160) nicht überlappen.

12. Batteriemodul (10) nach einem der Ansprüche 9 bis 11,
wobei die mindestens eine zweite Rippe (520) eine Vielzahl von zweiten Rippen (520) an der Außenumfangsfläche des zweiten Körpers (510) umfasst, und
wobei die Vielzahl von zweiten Rippen (520) asymmetrisch in Bezug auf eine Mitte des zweiten Körpers (510) sind.

13. Batteriemodul (10) nach Anspruch 12, wobei das zweite Gehäuse (200) Folgendes umfasst:
eine Vielzahl von zweiten Öffnungen (240), die eine Vielzahl von Batteriezellen aufnehmen;
eine Vielzahl von zweiten Trennwänden (250), welche die Vielzahl von zweiten Öffnungen (240) definieren; und
eine zweite Nut (260) zwischen der Vielzahl von zweiten Trennwänden (250),
wobei sich der zweite Körper (510) an Enden der Vielzahl von zweiten Trennwänden (250) befindet,
wobei die Vielzahl von zweiten Rippen (520) die zweite Nut (260) nicht überlappen, und
wobei sich zumindest ein Teil der dritten Rippe (530) in der zweiten Nut (260) befindet.

14. Batteriemodul (10) nach einem der Ansprüche 9 bis 13, wobei die mindestens eine zweite Rippe (520) und die dritte Rippe (530) in einem gleichen Winkel in einer Umfangsrichtung des zweiten Körpers (510) angeordnet sind.

15. Batteriemodul (10) nach einem der Ansprüche 9 bis 14, wobei die dritte Rippe (530) eine Länge aufweist, die kleiner als eine Länge jeder der mindestens einen zweiten Rippen (520) ist.

## Revendications

1. Module de batterie (10) comportant :
un premier boîtier (100) ;
un deuxième boîtier (200) relié au premier boîtier (100) ;
un premier bossage (400) sur le premier boîtier (100), le premier bossage comportant au moins une première nervure (420) ; et
un deuxième bossage (500) sur le deuxième boîtier (200), le deuxième bossage comportant au moins une deuxième nervure (520),
dans lequel le premier bossage (400) sur le premier boîtier (100) et le deuxième bossage (500) sur le deuxième boîtier (200) sont à des positions correspondant l'un à l'autre, s'étendent l'un vers l'autre, sont configurés pour être reliés l'un à l'autre par un organe de fixation dans une configuration dans laquelle au moins une partie du premier bossage et du deuxième bossage sont en contact l'un avec l'autre, et
**caractérisé en ce que**
un nombre de l'au moins une première nervure (420) est différent d'un nombre de l'au moins une deuxième nervure (520).

2. Module de batterie (10) selon la revendication 1, dans lequel le nombre de l'au moins une deuxième nervure (520) est supérieur au nombre de l'au moins une première nervure (420) sur le premier boîtier (100).

3. Module de batterie (10) selon la revendication 1 ou 2, dans lequel le premier boîtier (100) et le deuxième boîtier (200) comportent chacun :
une pluralité d'ouvertures accueillant une pluralité d'éléments de batterie ; et
une pluralité de parois de séparation définissant la pluralité d'ouvertures,
dans lequel le premier bossage du premier boîtier (100) et le deuxième bossage du deuxième boîtier (200) sont aux extrémités de parois de séparation adjacentes de la pluralité de parois de séparation et sont entre la pluralité d'ouvertures.

4. Module de batterie (10) selon l'une quelconque des revendications précédentes, dans lequel l'au moins une première nervure (420) s'étend de manière continue le long d'une direction de hauteur du premier bossage et s'étend parallèlement à la direction de hauteur du premier bossage.

5. Module de batterie (10) selon l'une quelconque des revendications précédentes, dans lequel une surface supérieure de l'au moins une première nervure (420) est à une même hauteur qu'une surface supérieure du premier bossage.

6. Module de batterie (10) selon l'une quelconque des revendications 3 à 5,
dans lequel l'au moins une première nervure (420) comporte une unité incurvée s'étendant à partir d'une surface circonférentielle externe du premier bossage et espacée vers l'intérieur par rapport à un bord de l'une de la pluralité de parois de séparation, et
dans lequel une extrémité de l'une de la pluralité de parois de séparation correspondant à l'unité incurvée est exposée.

7. Module de batterie (10) selon la revendication 6, dans lequel l'unité incurvée possède une direction de courbure différente d'une direction de courbure de la surface circonférentielle externe du premier bossage.

8. Module de batterie (10) selon l'une quelconque des revendications précédentes, dans lequel l'au moins une première nervure (420) se rétrécit dans une direction de hauteur du premier bossage.

9. Module de batterie (10) selon l'une quelconque des revendications précédentes,
dans lequel le premier bossage (400) comporte :
une première saillie de fixation (400) sur le premier boîtier (100), la première saillie de fixation (400) comportant un premier corps (410) et l'au moins une première nervure (420) sur une surface circonférentielle externe du premier corps (410), et
dans lequel le deuxième bossage (500) comporte :
une deuxième saillie de fixation (500) sur le deuxième boîtier (200), la deuxième saillie de fixation (500) comportant un deuxième corps (510), l'au moins une deuxième nervure (520) sur une surface circonférentielle externe du deuxième corps (510), et une troisième nervure (530) sur la surface circonférentielle externe du deuxième corps (510) à une position différente de l'au moins une deuxième nervure (520).

10. Module de batterie (10) selon la revendication 9,
dans lequel l'au moins une première nervure (420) comporte une pluralité de premières nervures (420) qui sont sur la surface circonférentielle externe du premier corps (410), et
dans lequel la pluralité de premières nervures (420) sont asymétriques par rapport à un centre du premier corps (410).

11. Module de batterie (10) selon la revendication 10, dans lequel le premier boîtier (100) comporte :
une pluralité de premières ouvertures (140) accueillant une pluralité d'éléments de batterie ;
une pluralité de premières parois de séparation (150) définissant la pluralité de premières ouvertures (140) ; et
une pluralité de premières rainures (160) entre la pluralité de premières parois de séparation (150), dans lequel le premier corps (410) est aux extrémités de la pluralité de premières parois de séparation (150), et dans lequel la pluralité de premières nervures (420) ne chevauchent pas la pluralité de premières rainures (160).

12. Module de batterie (10) selon l'une quelconque des revendications 9 à 11,
dans lequel l'au moins une deuxième nervure (520) comporte une pluralité de deuxièmes nervures (520) sur la surface circonférentielle externe du deuxième corps (510), et
dans lequel la pluralité de deuxièmes nervures (520) sont asymétriques par rapport à un centre du deuxième corps (510).

13. Module de batterie (10) selon la revendication 12, dans lequel le deuxième boîtier (200) comporte :
une pluralité de deuxièmes ouvertures (240) accueillant une pluralité d'éléments de batterie ;
une pluralité de deuxièmes parois de séparation (250) définissant la pluralité de deuxièmes ouvertures (240) ; et
une deuxième rainure (260) entre la pluralité de deuxièmes parois de séparation (250),
dans lequel le deuxième corps (510) est aux extrémités de la pluralité de deuxièmes parois de séparation (250),
dans lequel la pluralité de deuxièmes nervures (520) ne chevauchent pas la deuxième rainure (260), et
dans lequel au moins une partie de la troisième nervure (530) est dans la deuxième rainure (260).

14. Module de batterie (10) selon l'une quelconque des revendications 9 à 13, dans lequel l'au moins une deuxième nervure (520) et la troisième nervure (530) sont agencées à un angle égal dans une direction circonférentielle du deuxième corps (510).

15. Module de batterie (10) selon l'une quelconque des revendications 9 à 14, dans lequel la troisième nervure (530) possède une longueur inférieure à une longueur de chacune de l'au moins une deuxième nervure (520).
